# EUROPEAN PATENT SPECIFICATION

(11) **EP 4 574 502 B1**
(45) Date of publication and mention of the grant of the patent: **11.11.2026**
(21) Application number: 23218387.1
(22) Date of filing: 20.12.2023
(51) Int. Cl.: B60K 15/035

(54) **AN AIR FILTER SYSTEM FOR A TANK**
LUFTFILTERSYSTEM FÜR EINEN BEHÄLTER
SYSTÈME DE FILTRE À AIR POUR UN RÉSERVOIR

(43) Date of publication of application: 25.06.2025
(73) Proprietor: VOLVO TRUCK CORPORATION, 405 08 Göteborg (SE)
(72) Inventor: SAMPATHKUMAR, Sathyanarayanan, 560093 Bangalore (IN); JAYACHANDRAN, Praveen, 636401 Salem (IN)
(74) Representative: Zacco Sweden AB

(56) References cited:
- EP-B1- 3 190 278
- CN-B- 112 412 666
- DE-A1- 102014 219 528
- US-A1- 2015 075 380
- US-B1- 7 080 657

## Description

### TECHNICAL FIELD

The disclosure relates generally to air filtration. In particular aspects, the disclosure relates to an air filter system for a tank arranged to provide a fluid. In further aspects, the disclosure also relates to a vehicle comprising such an air filter system. Here, although the disclosure may be described with respect to a particular tank, fluid or vehicle, the disclosure is not restricted to any particular tank, fluid or vehicle.

### BACKGROUND

Conventional vehicles utilize gas tanks to store fuel, and during operation, the fuel level within the tank can fluctuate. This fluctuation leads to changes in air pressure within the gas tank, necessitating a ventilation system to manage the release of excess pressure and the intake of air. The intake of ambient air is crucial to prevent the creation of a vacuum within the tank, which could impede the flow of fuel to the engine.

Existing gas tank ventilation systems commonly incorporate simple filtration mechanisms to prevent the ingress of contaminants such as dust, debris, and moisture. However, over time, the air filter material in all such filtration systems will become restricted or clogged which will prevent the intake of ambient air into the tank. When this happens, it is necessary to replace the old air filter material with a new air filter material. However, it is not always easy to determine when to replace the air filter material.

One solution is to simply exchange the air filter material on a regular basis after a certain amount of time, e.g. based on the recommendation of the manufacturer. However, this has drawbacks in that the level of restriction or clogging of the air filter material may differ significantly depending on where, when and how the tank/vehicle has been operated, which may result in that the air filter material is exchanged long before its full utilization is reached. This may lead to unnecessary waste of fully functioning air filter material and excess maintenance work.

Hence, there is a need for improving the replacement of air filter material in an air filter system for a tank arranged to provide a fluid. DE 10 2014 219528 A1 discloses a steam release system comprising a tank shut-off valve and a canister venting valve, each valve incorporating a locking mechanism to keep the valves in open position. A diagnostic test is performed on the drainage system to ensure that each of the valves is functioning correctly.

### SUMMARY

According to a first aspect of the embodiments herein, an air filter system for a tank arranged to provide a fluid is described. The air filter system comprises an air filter housing being arranged to receive and hold an air filter material between an air inlet and an air outlet, wherein the vent filter housing is further arranged to guide unfiltered ambient air from the air inlet towards the air filter material and to guide filtered air from the air filter material out through the air outlet to the tank. The air filter system further comprises an indicator arrangement in fluid connection with the air outlet and being configured to mechanically indicate a congestion level of the air filter material based on an air pressure difference at the air outlet caused by an accumulation of particles in the air filter material.

The first aspect of the disclosure may seek to improve the replacement of air filter material in an air filter system for a tank arranged to provide a fluid. A technical benefit may include that the remaining dust holding capacity of the air filter system may be easily observed through visual inspection on the outside of the air filter system, which means that the air filter material in the air filter system may be replaced in a timely manner once a certain non-acceptable level of restriction in the air filter material has been reached. Hence, operators may utilize the air filter material in the air filter system to its maximum limit without impacting the performance or functionality of the tank and the air filter system. This also means that unnecessary waste of air filter material and/or unnecessary maintenance work may be avoided.

According to the invention, The indicator arrangement comprises a filtered air passage between the air outlet and a closed compartment. Here, a technical benefit may be that this creates separate and protected space in which the air pressure difference may safely be measured. In some embodiments, the filtered air passage is arranged at an angle with respect to the air flow direction in the air outlet to fluidly connect the air outlet with the closed compartment. In this case, a technical benefit may be that any potential back-splash of fluid from the tank will flow past the entry of the filtered air passage without it possible blocking or obstructing the filtered air passage.

According to some embodiments, the closed compartment comprises a recess arranged with a pressure plate attached to a loaded spring, wherein the pressure plate is arranged to mechanically indicate the congestion level of the air filter material when acted upon by the air pressure difference. Here, a technical benefit may include that it provides a fully automated and cost-effective mechanical indicator in which no external energy source is required for the indicator arrangement operation.

In some embodiments, a wall of the closed compartment is configured such that the pressure plate is visible from the outside of the air filter housing. A technical benefit may be that it provides a window through which a viewer may visually see the position of the pressure plate and from this position determine the level of congestion or clogging of the air filter material in the air filter system. In some embodiments, the air filter housing comprises markings visible from the outside of the air filter housing that indicate the congestion level of the air filter material relative to movement of the pressure plate. A technical benefit may be that it eases the understanding and reading of the congestion or clogging level of the air filter material in the air filter system.

In some embodiments, the air outlet comprises a filtered air guide that extends into the interior of the air filter housing and there comprise an opening to receive the filtered air. A technical benefit may be that the filtered air guide enables an easy provision of the filtered air passage into the closed compartment. In some embodiments, the air outlet comprises a filtered air guide extending into the interior of the air filter housing such that back-splash from the tank is allowed to bypass the air filter material within the air filter housing. A technical benefit may be that the filtered air received by the air outlet is first channeled through the filtered air guide which has an air intake that is located at a point which may be lower or passed the location of the air filter material. This allows for any potential back-splash of fluid from the tank through the air outlet to not risk coming in contact with the air filter material and compromise its functionality.

In some embodiments, the interior of the air filter housing comprise a receptacle arrangement arranged to receive back-splash from the filtered air guide and control the discharge of the back-splash out from the interior of the air filter housing via the air inlet. A technical benefit may be that the receptacle arrangement allows any potential back-splash of fluid from the tank that passes through the air outlet and the filtered air guide to be collected and expelled out from the air filter housing.

In some embodiments, the filtered air guide extends into and has an open end within the receptacle arrangement. A technical benefit may be that it ensures that all back-splash of fluid from the tank is collected by the receptacle arrangement.

According to a second aspect of the embodiments herein, a vehicle comprising an air filter system as described above is provided.

The above aspects, accompanying claims, and/or embodiments disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

Features and advantages of the embodiments will become readily apparent to those skilled in the art by the following detailed description of exemplary embodiments thereof with reference to the accompanying drawings, wherein:
**FIG. 1** is an example of a vehicle,
**FIG. 2** is a schematic illustration of a tank comprising an air filter system according to some embodiments,
**FIG.** 3 is a cut-out view of an air filter system according to some embodiments,
**FIG. 4** is another cut-out view of an air filter system according to some embodiments, and
**FIG.** 5 is a exploded view of an air filter system according to some embodiments.

### DETAILED DESCRIPTION

Aspects set forth below represent the necessary information to enable those skilled in the art to practice the disclosure.

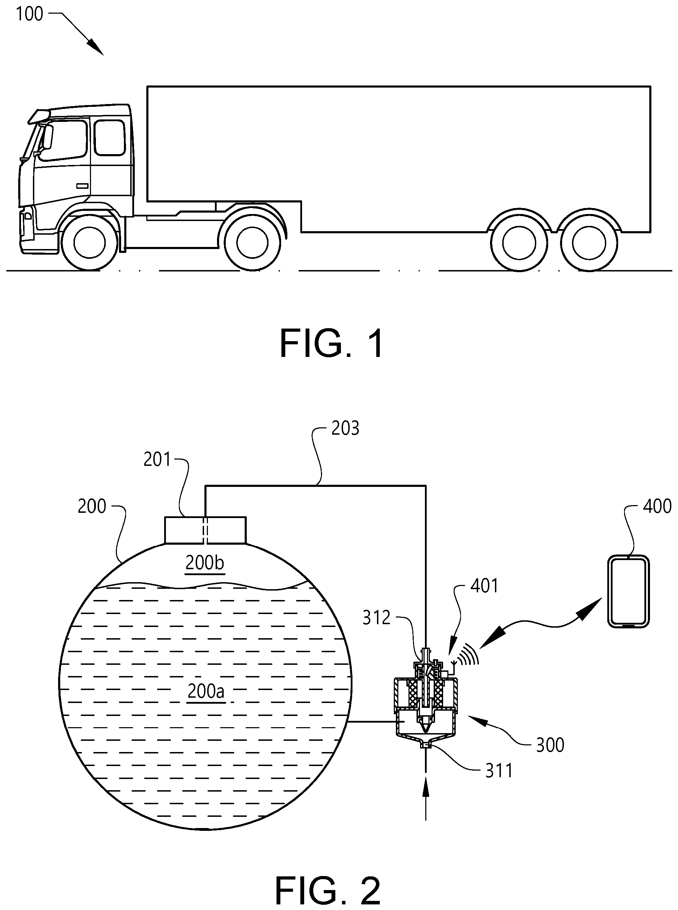

**FIG. 1** illustrates an example of a **vehicle 100** in which a tank and an air filter system according to embodiments described herein may be implemented. The vehicle 100 is here exemplified as a heavy-duty vehicle combination for cargo transport. However, the embodiments herein should not be considered limited to a particular type of vehicle, but should also be considered applicable in any type of vehicle or vessel using a tank. A non-exhaustive list of examples of such vehicles may comprise trucks, busses, construction equipments, trailers, wheel loaders, articulated haulers, excavators, backhoe loaders, passenger cars, sea or marine vessels, working machines, etc.

**FIG. 2** shows a **tank 200** comprising an air **filter system 300** according to some embodiments. The tank 200 may be any tank arranged to provide a **fluid 200a.** The fluid 200a may be any fluid, such as, e.g. gasoline, oil, washer fluid, etc., that is stored in the tank 200 to be provided to other components when necessary. The tank 200 may also be any tank that need to avoid contaminates, such as, e.g. dust, water, etc., to enter to the tank 200 during intake of air into the tank 200.

In the example shown in FIG. 2, the tank 200 comprises a fluid 200a. The tank 200 may also be fitted with an air **inlet 201** arranged to be connected to a **filtered** air **connector 203,** such as, e.g. an air tube or hose. The filtered air connector 203 is arranged to guide filtered air from an air **outlet 312** of the air filter system 300 into a **remaining** space **200b** within the tank 200 not occupied by the fluid 200a. The air filter system 300 is here arranged to receive ambient air via the air **inlet 311.**

Optionally, according to some embodiments, the air filter system 300 may comprise a **sensor device 401** arranged to communicate with a **remote user device 400,** for example, a wireless communications device or wireless communications network. The sensor device 401 may be arranged to measure an air pressure difference at the air outlet 312 of the air filter system 300 and transmit the measurement information to the remote user device 400. Based on the receive measurement information, the remote user device 400 may further be arranged to use the measurement information in order to remotely determine the congestion or clogging level of an air filter material in the air filter system 300 and, for example, visually indicate this to a user of the remote user device 400. The remote user device 400 may also be arranged to transmit information to the sensor device 401. For example, the remote user device 400 may transmit reset instructions for the sensor device 401 when, e.g. an air filter material in the air filter system 300 has been replaced or in case of any false alarms. The latter is due to the fact that sometimes the information may comprise inaccurate measurement values due to various reasons, such as, e.g. a malfunction of the air filter system 300, tank 200 and/or the filtered air connector 203.

According to another option, the sensor device 401 may be arranged to detect the level of a pressure plate 324, as described in more detail below. The sensor device 401 may in this case be connected to, or be integrated with, a microcontroller (not shown) configured to control one or more LED lights (not shown) to indicate the congestion or clogging level of an air filter material in the air filter system 300. The microcontroller and/or sensor device 401 may, in this case, also comprise a reset button (not shown). The reset button may be used when the air filter material in the air filter system 300 has been replaced.

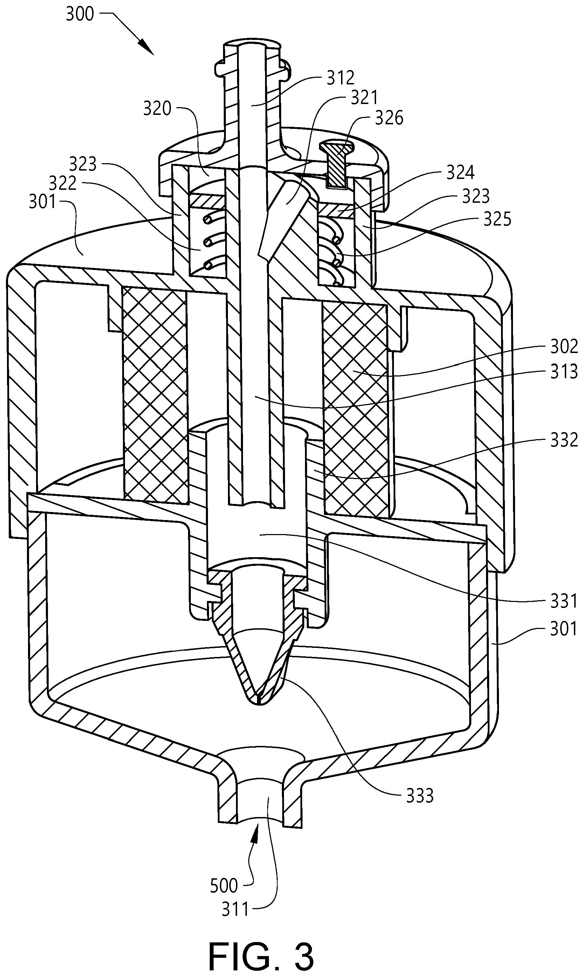

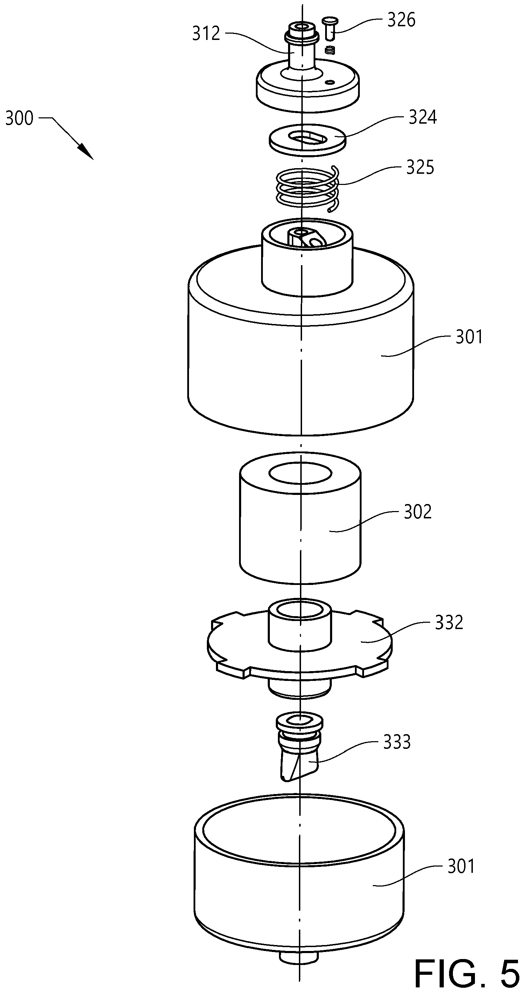

**FIG.** 3 shows an example of the air filter system 300 according to some embodiments. The air filter system 300 comprises an **air filter housing 301.** The air filter housing 301 may be composed of an upper and lower part that when assembled together as shown in FIG.3 forms an interior or closed space of the air filter housing 301. The upper and lower part are also further illustrated in the exploded view shown below in FIG. 5.

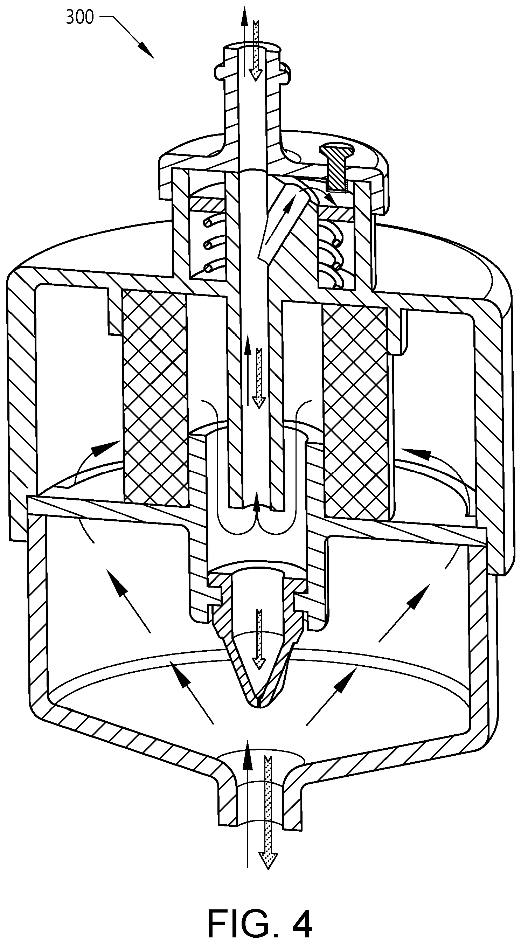

The air filter housing 301 comprises an **air filter material 302.** The air filter material 302 may be any suitable air filter material and may be suitably replaced with a new air filter material once the old air filter material is end of life. In the example shown in FIG. 3, the air filter material 302 is hold in place inside the air filter housing 301 by the upper part of the air filter housing 301 and an **intermediate section 332.** Hence, the air filter housing 301 is arranged to receive and hold the air filter material 302 between the air inlet 311 and the air outlet 312. Here, it follows that the air filter material 302 is arranged downstream relative to the air inlet 311 and the air outlet 312 is arranged downstream relative to the air filter material 302. The air filter housing 301 is further arranged to guide unfiltered ambient air 500 from the air inlet 311 towards the air filter material 302 and to guide filtered air from the air filter material 302 out through the air outlet 312 towards a tank 200. This guided air flow is illustrated by the narrow arrows in **FIG. 4****.**

The air filter housing 301 further comprises an **indicator arrangement 320-326.** The indicator arrangement 320-326 arranged in fluid connection with the air outlet 312. The indicator arrangement 320-326 is configured to mechanically indicate a congestion level of the air filter material 302 based on the air pressure difference at the air outlet 312 caused by an accumulation of particles in the air filter material 302.

In some embodiments, the indicator arrangement 320-326 may comprise a **filtered air passage 321** between the air outlet 312 and a **closed compartment 320.** Here, by being located between the air outlet 312 and the closed compartment 320, the filtered air passage 321 fluidly connects the air outlet 312 with the closed compartment 320. This means that there will be no pressure difference between the filtered air passing from the air filter material 302 through and towards the air outlet 312 and the air inside the closed compartment 320. This is also illustrated by the narrow arrows in FIG. 4. In some embodiments, the filtered air passage 321 may be arranged at an angle with respect to air flow direction in the air outlet 312 to fluidly connect the air outlet 312 with the closed compartment 320. This means, for example, that the filtered air passage 321 may be tilted diagonally at angle, e.g. 0° < angle > 90°, compared to the air flow direction in the air outlet 312. In other words, the filtered air passage 321 may be arranged in partly upwards direction, i.e. the open end of the filtered air passage 321 fluidly connected to the closed compartment 320 may be arranged above the open end of the filtered air passage 321 fluidly connected to the air outlet 312, as the air filter housing 301 and the air filter system 300 is oriented in its normal operation position. As can be seen in FIG. 3, such an angled passage advantageously will restrict any back-splash of any fluid 200a from the tank 200 that enters the air filter housing 301 from entering the filtered air passage 321 and the closed compartment 320. A flow of potential back-splash from the tank 200 is illustrated by the dotted arrows in FIG. 4.

The closed compartment 320 may comprise a **recess 322.** The recess may be formed by a **wall 323** of the air filter housing 301 and a cap section forming the air outlet 312. The cap section forming the air outlet 312 may be fixed to the top of the wall 323 of the air filter housing 301, or be screw on in case the wall 323 comprise a threaded section. The recess 322 may be arranged with a **pressure plate 324** attached to a **loaded spring 325.** The pressure plate 324 may be arranged to mechanically indicate the congestion level of the air filter material 302 when acted upon by an air pressure difference. Here, the air pressure difference is the air pressure difference compared to an air pressure within the air outlet 312 for which the pressure plate 324 and the loaded spring 325 has been calibrated when a clean air filter material 302 is inserted in the air filter housing 301. Thus, the more the air filter material 320 is restricted or obstructed by contaminants or air particles, the larger the air pressure difference compared to the calibrated air pressure will be. This increase in air pressure difference will act as an actuator for the pressure plate 324 and loaded spring 325 which then will start to move vertically within the recess 322.

In some embodiments, the wall 323 of the closed compartment 320 is configured such that the pressure plate 324 is visible from the outside of the air filter housing 301. For example, the wall 323 may comprise an open slit or see-through window (not shown) that allows a user to see the position of the pressure plate 324 as it moves within the recess 322 inside the closed compartment 320 of the air filter housing 301. Also, according to some embodiments, the air filter housing 301 may comprise markings (not shown) visible from the outside of the air filter housing 301 that indicates the congestion level of the air filter material 302 relative to movement of the pressure plate 324. For example, this means that next to the open slit or see-through window on the outside of the wall 323 of the closed compartment 320 there may be different markings which when reached by the pressure plate 324 indicates different levels of congestion of the air filter material 302 inside the air filter housing 301. For example, one way of doing this is to have 3 stages of indications, e.g. green, yellow and red markings, that is related to the position of the pressure plate 324 in order to indicate to a user when the air filter material 302 may be timely replaced. For example, if the pressure plate 324 is at the green level, then this may indicate to the user that the air filter material 302 is at a full dust holding capacity and do not need to be replaced. If the pressure plate 324 is at the yellow level, then this may indicate to the user that the air filter material 302 is at a half dust holding capacity and may need to be replaced. If the pressure plate 324 is at the red level, then this may indicate to the user that the air filter material 302 is at or almost at zero dust holding capacity and must be replaced.

Additionally, according to some embodiments, the indicator arrangement 320-326 may comprise a **mechanical reset button 326.** The mechanical reset button 326 may suitably be arranged in the cap section forming the air outlet 312. The mechanical reset button 326 may, when being pressed downward towards the pressure plate 324 and the loaded spring 325, reset the loaded spring 325 and the pressure plate 324 into its original position. The mechanical reset button 326 may be spring activated, which means that upon release the mechanical reset button 326 will go back to its original position. A reset using the mechanical reset button 326 may be employed by a user when, e.g. an air filter material in the air filter system 300 has been replaced or in case of any false alarms. The latter is due to the fact that sometimes the loaded spring 325 and the pressure plate 324 may show inaccurate values due to various reasons, such as, e.g. a malfunction of the air filter system 300, tank 200 and/or the filtered air connector 203. In other words, the mechanical reset button 326 may be used for replacement of air filter material filter 302 and/or to reset the loaded spring 325 and the pressure plate 324 into its original position to e.g. cross-check the exact clogging information it shows for the air filter material 302.

Furthermore, the upper part of the air filter housing 301 may be shaped such that the air outlet 312 comprise a **filtered air guide 313.** The filtered air guide 313 extends into the interior of the air filter housing 301 and there comprise an opening to receive filtered air from the air filter material 302. This is also illustrated by the narrow arrows in FIG. 4. In some embodiments, the filtered air guide 313 may extend into the interior of the air filter housing 301 such that back-splash from the tank 200 is allowed to bypass the air filter material 302 within the air filter housing 301. In the example shown in FIG. 3, this means, for example, that the filtered air guide 313 is long enough reach below a wall of the intermediate section 332. In some embodiments, the filtered air guide 313 may extends into and has an open end within the receptacle arrangement 331-333 as described below.

Also, in some embodiments, the interior of the air filter housing 301 may comprise a **receptacle arrangement 331-333.** The receptacle arrangement 331-333 may be arranged to receive back-splash from the filtered air guide 313 and control the discharge of the back-splash out from the interior of the air filter housing 301 via the air inlet 311. The receptacle arrangement 331-333 may be composed of a wall of the intermediate section 332 forming a cavity 331 having an open end towards the air inlet 311 of the air filter housing 301. In the open-end of the cavity 331, a valve 333 may be fitted. The valve 333 may be configured to receive back-splash of the fluid 200a from the filtered air guide 313, and as a large enough volume of back-splash of the fluid 200a has been received, expel the fluid 200a out through the air inlet 311 in a controlled manner. For example, the material of the valve 333 may be arranged to be affected by the weight of the fluid 200a accumulated therein such that the valve 333 eventually opens up and releases the fluid 200a as soon as a large enough volume of the fluid 200a has been collected at the tip of the valve 333, i.e. its bottom end. The valve 333 may, for example, be made of rubber or other suitable material.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of the inventive concepts being set forth in the following claims.

## Claims

1. An air filter system (300) for a tank (200) arranged to provide a fluid (200a), comprising:
an air filter housing (301) being arranged to receive and hold an air filter material (302) between an air inlet (311) and an air outlet (312, 313), wherein the air filter housing (301) is further arranged to guide unfiltered ambient air (500) from the air inlet (311) towards the air filter material (302) and to guide filtered air from the air filter material (302) out through the air outlet (312, 313) to the tank (200), and
an indicator arrangement (320-326) in fluid connection with the air outlet (312, 313) and being configured to mechanically indicate a congestion level of the air filter material (302) based on the air pressure difference at the air outlet (312, 313) caused by an accumulation of particles in the air filter material (302) **characterized in that** the indicator arrangement (320-326) comprises a filtered air passage (321) between the air outlet (312, 313) and a closed compartment (320).

2. The air filter system (300) according to claim 1, wherein the filtered air passage (321) is arranged at an angle with respect to the air flow direction in the air outlet (312, 313) to fluidly connect the air outlet (312, 313) with the closed compartment (320).

3. The air filter system (300) according to any of claims 1-2, wherein the closed compartment (320) comprises a recess (322) arranged with a pressure plate (324) attached to a loaded spring (325), wherein the pressure plate (324) is arranged to mechanically indicate the congestion level of the air filter material (302) when acted upon by the air pressure difference.

4. The air filter system (300) according to any of claims 1-3, wherein a wall (323) of the closed compartment (320) is configured such that the pressure plate (324) is visible from the outside of the air filter housing (301).

5. The air filter system (300) according to claim 4, wherein the air filter housing (301) comprise markings visible from the outside of the air filter housing (301) that indicates the congestion level of the air filter material (302) relative to movement of the pressure plate (324).

6. The air filter system (300) according to any of claims 1-5, wherein the air outlet (312, 313) comprises a filtered air guide (313) that extends into the interior of the air filter housing (301) and there comprises an opening to receive the filtered air.

7. The air filter system (300) according to any of claims 1-5, wherein the air outlet (312, 313) comprises a filtered air guide (313) extending into the interior of the air filter housing (301) such that back-splash from the tank (200) is allowed to bypass the air filter material (302) within the air filter housing (301).

8. The air filter system (300) according to claim 7, wherein the interior of the air filter housing (301) comprises a receptacle arrangement (331-333) arranged to receive back-splash from the filtered air guide (313) and control the discharge of the back-splash out from the interior of the air filter housing (301) via the air inlet (311).

9. The air filter system (300) according to claim 8, wherein the filtered air guide (313) extends into and has an open end within the receptacle arrangement (331-333).

10. A vehicle (100) comprising an air filter system (300) according to any of claims 1-9.

## Patentansprüche

1. Luftfiltersystem (300) für einen Tank (200), der zur Bereitstellung eines Fluids (200a) ausgelegt ist, umfassend:
ein Luftfiltergehäuse (301), das dazu ausgelegt ist, ein Luftfiltermaterial (302) zwischen einem Lufteinlass (311) und einem Luftauslass (312, 313) aufzunehmen und zu halten, wobei das Luftfiltergehäuse (301) ferner dazu ausgelegt ist, ungefilterte Umgebungsluft (500) vom Lufteinlass (311) zum Luftfiltermaterial (302) zu leiten und gefilterte Luft vom Luftfiltermaterial (302) durch den Luftauslass (312, 313) zum Tank (200) zu leiten, und
eine Anzeigeranordnung (320-326), die in Fluidverbindung mit dem Luftauslass (312, 313) steht und dazu ausgelegt ist, einen Verstopfungsgrad des Luftfiltermaterials (302) mechanisch basierend auf der Luftdruckdifferenz am Luftauslass (312, 313) anzuzeigen, die durch eine Ansammlung von Partikeln im Luftfiltermaterial (302) verursacht wird, **dadurch gekennzeichnet, dass** die Anzeigeranordnung (320-326) einen Durchgang (321) für gefilterte Luft zwischen dem Luftauslass (312, 313) und einem geschlossenen Fach (320) umfasst.

2. Luftfiltersystem (300) nach Anspruch 1, wobei der Durchgang (321) für gefilterte Luft in einem Winkel zur Luftströmungsrichtung im Luftauslass (312, 313) angeordnet ist, um den Luftauslass (312, 313) mit dem geschlossenen Fach (320) fluidisch zu verbinden.

3. Luftfiltersystem (300) nach einem der Ansprüche 1 bis 2, wobei das geschlossene Fach (320) eine Aussparung (322) umfasst, die mit einer Druckplatte (324) ausgestattet ist, die an einer vorgespannten Feder (325) befestigt ist, wobei die Druckplatte (324) dazu ausgelegt ist, den Verstopfungsgrad des Luftfiltermaterials (302) mechanisch anzuzeigen, wenn sie durch die Luftdruckdifferenz beaufschlagt wird.

4. Luftfiltersystem (300) nach einem der Ansprüche 1 bis 3, wobei eine Wand (323) des geschlossenen Fachs (320) so ausgelegt ist, dass die Druckplatte (324) von außerhalb des Luftfiltergehäuses (301) sichtbar ist.

5. Luftfiltersystem (300) nach Anspruch 4, wobei das Luftfiltergehäuse (301) von außerhalb des Luftfiltergehäuses (301) sichtbare Markierungen umfasst, die den Verstopfungsgrad des Luftfiltermaterials (302) relativ zur Bewegung der Druckplatte (324) anzeigen.

6. Luftfiltersystem (300) nach einem der Ansprüche 1 bis 5, wobei der Luftauslass (312, 313)
eine Führung (313) für gefilterte Luft umfasst, die sich in das Innere des
Luftfiltergehäuses (301) erstreckt und dort eine Öffnung zur Aufnahme der gefilterten Luft aufweist.

7. Luftfiltersystem (300) nach einem der Ansprüche 1 bis 5, wobei der Luftauslass (312, 313) eine Führung (313) für gefilterte Luft umfasst, die sich in das Innere des Luftfiltergehäuses (301) erstreckt, derart dass Rückspritzer aus dem Tank (200) das Luftfiltermaterial (302) innerhalb des Luftfiltergehäuses (301) umgehen können.

8. Luftfiltersystem (300) nach Anspruch 7, wobei das Innere des Luftfiltergehäuses (301) eine Auffanganordnung (331-333) umfasst, die dazu ausgelegt ist, Rückspritzer von der Führung (313) für gefilterte Luft aufzunehmen und die Ableitung der Rückspritzer aus dem Inneren des Luftfiltergehäuses (301) über den Lufteinlass (311) zu steuern.

9. Luftfiltersystem (300) nach Anspruch 8, wobei die Führung (313) für gefilterte Luft sich in die Auffanganordnung (331-333) erstreckt und ein offenes Ende innerhalb dieser aufweist.

10. Fahrzeug (100), das ein Luftfiltersystem (300) nach einem der Ansprüche 1 bis 9 umfasst.

## Revendications

1. Système de filtre à air (300) pour un réservoir (200) agencé pour la fourniture d'un fluide (200a), comprenant :
un boîtier de filtre à air (301) agencé pour la réception et le maintien d'un matériau de filtre à air (302) entre une entrée d'air (311) et une sortie d'air (312, 313), dans lequel le boîtier de filtre à air (301) est en outre agencé pour le guidage d'air ambiant non filtré (500) à partir de l'entrée d'air (311) vers le matériau de filtre à air (302) et pour le guidage d'air filtré à partir du matériau de filtre à air (302) vers l'extérieur à travers la sortie d'air (312, 313) jusqu'au réservoir (200), et
un agencement d'indicateur (320-326) en liaison fluidique avec la sortie d'air (312, 313) et configuré pour l'indication mécanique d'un niveau d'encombrement du matériau de filtre à air (302) sur la base de la différence de pression d'air au niveau de la sortie d'air (312, 313) causée par une accumulation de particules dans le matériau de filtre à air (302) **caractérisé en ce que** l'agencement d'indicateur (320-326) comprend un passage d'air filtré (321) entre la sortie d'air (312, 313) et un compartiment fermé (320).

2. Système de filtre à air (300) selon la revendication 1, dans lequel le passage d'air filtré (321) est agencé selon un angle par rapport à la direction d'écoulement d'air dans la sortie d'air (312, 313) pour la liaison fluidique de la sortie d'air (312, 313) avec le compartiment fermé (320).

3. Système de filtre à air (300) selon la revendication 1 ou 2, dans lequel le compartiment fermé (320) comprend un évidement (322) agencé avec une plaque de pression (324) fixée à un ressort contraint (325), dans lequel la plaque de pression (324) est agencée pour l'indication mécanique du niveau d'encombrement du matériau de filtre à air (302) lorsqu'elle est soumise à l'action de la différence de pression d'air.

4. Système de filtre à air (300) selon l'une quelconque des revendications 1 à 3, dans lequel une paroi (323) du compartiment fermé (320) est configurée de telle sorte que la plaque de pression (324) est visible depuis l'extérieur du boîtier de filtre à air (301).

5. Système de filtre à air (300) selon la revendication 4, dans lequel le boîtier de filtre à air (301) comprennent des marquages visibles depuis l'extérieur du boîtier de filtre à air (301) qui indiquent le niveau d'encombrement du matériau de filtre à air (302) par rapport au mouvement de la plaque de pression (324).

6. Système de filtre à air (300) selon l'une quelconque des revendications 1 à 5, dans lequel la sortie d'air (312,313) comprend
un guide d'air filtré (313) qui s'étend dans l'intérieur du boîtier de filtre à air
(301) et y comprend une ouverture pour la réception de l'air filtré.

7. Système de filtre à air (300) selon l'une quelconque des revendications 1 à 5, dans lequel la sortie d'air (312, 313) comprend un guide d'air filtré (313) s'étendant dans l'intérieur du boîtier de filtre à air (301) de sorte qu'une éclaboussure en retour provenant du réservoir (200) est autorisée à contourner le matériau de filtre à air (302) à l'intérieur du boîtier de filtre à air (301).

8. Système de filtre à air (300) selon la revendication 7, dans lequel l'intérieur du boîtier de filtre à air (301) comprend un agencement de réceptacle (331-333) agencé pour la réception d'éclaboussures en retour provenant du guide d'air filtré (313) et la commande de la décharge de l'éclaboussure en retour hors de l'intérieur du boîtier de filtre à air (301) via l'entrée d'air (311).

9. Système de filtre à air (300) selon la revendication 8, dans lequel le guide d'air filtré (313) s'étend dans et a une extrémité ouverte à l'intérieur de l'agencement de réceptacle (331-333).

10. Véhicule (100) comprenant un système de filtre à air (300) selon l'une quelconque des revendications 1 à 9.
